(19) Europäisches Patentamt
European Patent Office
Office européen des brevets

(11) **EP 1 441 131 B1**

(12) **EUROPÄISCHE PATENTSCHRIFT**

(45) Veröffentlichungstag und Bekanntmachung des Hinweises auf die Patenterteilung:
**20.12.2017  Patentblatt 2017/51**

(51) Int Cl.:
**B01L 3/00** *(2006.01)*     **F16K 99/00** *(2006.01)*

(21) Anmeldenummer: **04001098.5**

(22) Anmeldetag: **20.01.2004**

(54) **Verwendung eines mikrofluidischen Schalters zum Anhalten eines Flüssigkeitsstroms während eines Zeitintervalls**

Use of a microfluidic switch to temporarily stop a flow of liquid

Utilisation d'un commutateur microfluidique pour arrêter temporairement un courant de liquide

(84) Benannte Vertragsstaaten:
**AT BE BG CH CY CZ DE DK EE ES FI FR GB GR HU IE IT LI LU MC NL PT RO SE SI SK TR**

(30) Priorität: **23.01.2003  DE 10302720**

(43) Veröffentlichungstag der Anmeldung:
**28.07.2004  Patentblatt 2004/31**

(73) Patentinhaber: **Boehringer Ingelheim microParts GmbH**
**44227 Dortmund (DE)**

(72) Erfinder:
• **Peters, Ralf-Peter, Dr.**
**51467 Bergisch-Gladbach (DE)**
• **Blankenstein, Gert, Dr.**
**44139 Dortmund (DE)**
• **Bartos, Holger, Dr.**
**44287 Dortmund (DE)**
• **Marquordt, Claus,**
**44039 Dortmund (DE)**

(74) Vertreter: **Graefe, Jörg et al**
**Fritz Patent- und Rechtsanwälte Partnerschaft mbB**
**Postfach 1580**
**59705 Arnsberg (DE)**

(56) Entgegenhaltungen:
WO-A-02/11888     WO-A-02/24320
WO-A-02/086333     WO-A1-99/46045
US-A- 4 676 274     US-A- 6 090 251
US-A1- 2002 036 018

• MAN P F ET AL: "Microfabricated capillarity-driven stop valve and sample injector", MICRO ELECTRO MECHANICAL SYSTEMS, 1998. MEMS 98. PROCEEDINGS., THE ELE VENTH ANNUAL INTERNATIONAL WORKSHOP ON HEIDELBERG, GERMANY 25-29 JAN. 1998, NEW YORK, NY, USA,IEEE, US, 25 January 1998 (1998-01-25), pages 45-50, XP010270231, DOI: 10.1109/MEMSYS.1998.659727 ISBN: 978-0-7803-4412-9

## Beschreibung

Die Erfindung betrifft eine Verwendung eines mikrofluidischen Schalters zum Anhalten eines Flüssigkeitsstroms während eines Zeitintervalls in einem ersten Kanal. Der Flüssigkeitsstrom soll dabei am Ende des ersten Kanals von einem Anhaltemittel für das definierte Zeitintervall angehalten werden. Nach dem Ablauf des Zeitintervalls soll der Flüssigkeitsstrom fortgesetzt werden. Der erste Kanal des mikrofluidischen Schalters, wie auch andere Kanäle, kann dabei eine Aufweitung wie zum Beispiel ein Hohlraum und/oder eine Kammer sein. Es kann sich bei einem solchen Kanal um eine Nut in einer Oberfläche handeln, die vorzugsweise mit einem Deckel verschlossen ist. Ebenso ist es möglich, dass der Kanal als Röhrchen ausgebildet ist. Ein Kanal im Sinne der Erfindung kann im Grunde jede Struktur sein, welche geeignet ist eine Flüssigkeit oder ein Gas bei einem Transport in eine bestimmte Richtung zu leiten.

Ein mikrofluidischer Schalter der eingangs genannten Art kann beispielsweise in mikrofluidischen Anordnungen eingesetzt werden, wie unter anderem aus den Druckschriften WO 99/46045 und US 6,296,126 B1 bekannt ist.

Für verschiedene nasschemische, biochemische und diagnostische Analysen ist es notwendig, dass eine Probenflüssigkeit während eines definierten Zeitintervalls mit Reagenzien zum Beispiel in einer Reaktionskammer einer mikrofluidischen Anordnung vermischt wird, wobei während dieses Zeitintervalls dann die Probenflüssigkeit mit den Reagenzien zu einem Produkt umgesetzt wird. Dieses Produkt wird anschließend der Reaktionskammer entnommen, um analysiert zu werden. Die Anhaltemittel bei bekannten mikrofluidischen Anordnungen sind in der Regel als mechanische Ventile ausgeführt, welche von außen angesteuert werden müssen. Derartige Ventile werden benutzt, um einzelne Reaktionskammern oder auch Analysekammern fluidisch voneinander zu trennen. Über eine externe Zeitsteuerung, beispielsweise über einen Computer, lassen sich die entsprechenden Inkubationszeiten, d. h. die Zeitintervalle des Verweilens der Proben beziehungsweise Produkte in den Reaktionskammern und/oder Analysekammern einstellen.

Diese mikrofluidischen Schalter mit Mikroventilen haben die Eigenschaft, dass sie mechanisch bewegliche Teile aufweisen, die beispielsweise elektrisch entsprechend angesteuert werden. Dieses führt zu einem hohen Geräteaufwand. Zusätzlich ist auch eine Integration derartiger Mikroventile in die mikrofluidischen Schalter aufwendig, insbesondere dann wenn der mikrofluidische Schalter in Kunststoff realisiert ist.

Aus der Druckschrift US 2002/0036018 A1 ist eine Vorrichtung bekannt, bei der eine Flüssigkeit in einen Kanal eingefüllt wird. Am Ende des ersten Kanals ist ein Anhaltemittel vorgesehen. Das Anhaltemittel ist ein Kapillarstopp, der durch sich ändernde geometrische Eigenschaften am Ende des ersten Kanals hergestellt ist. An seinem Ende weist der erste Kanal eine horizontale Einschnürung auf, an deren Kanten eine Kapillarkraft entgegen der Transportkräfte wirkt, die die Flüssigkeit in dem ersten Kanal transportieren. Am Ende des ersten Kanals, jenseits des Anhaltemittels endet neben dem ersten Kanal auch ein zweiter Kanal. Der erste Kanal und der zweite Kanal haben so einen gemeinsamen Endbereich.

Wird nun in dem zweiten Kanal eine Flüssigkeit in den gemeinsamen Endbereich transportiert, wird der Kapillarstopp am Ende des ersten Kanals von der Seite des gemeinsamen Endbereichs benetzt. Dadurch wird der Kapillarstopp aufgehoben und die auf die Flüssigkeit im ersten Kanal wirkenden Transportkräfte können die Flüssigkeit aus dem ersten Kanal herausbefördern. Der Kapillarstopp am Ende des ersten Kanals ist ein Schalter, der durch das Aufheben des Kapillarstopps geschlossen wird.

Der erste und der zweite Kanal weisen neben dem gemeinsamen Endbereich auch einen gemeinsamen Anfangsbereich auf. Sowohl der erste Kanal als auch der zweite Kanal beginnen am Ende eines Hauptkanals, über den die Flüssigkeiten zu den beiden Kanälen transportiert werden.

Um sicherzustellen, dass zunächst der erste Kanal befüllt wird, ist am Beginn des zweiten Kanals ein Kapillarstopp vorgesehen. Dieser bewirkt Kapillarkräfte, die kleiner sind als die Kapillarkräfte, die durch den Kapillarstopp am Ende des ersten Kanals erzeugt werden. Sobald der erste Kanal befüllt ist, muss der Kapillarstopp am Beginn des zweiten Kanals überwunden werden, um den zweiten Kanal zu befüllen.

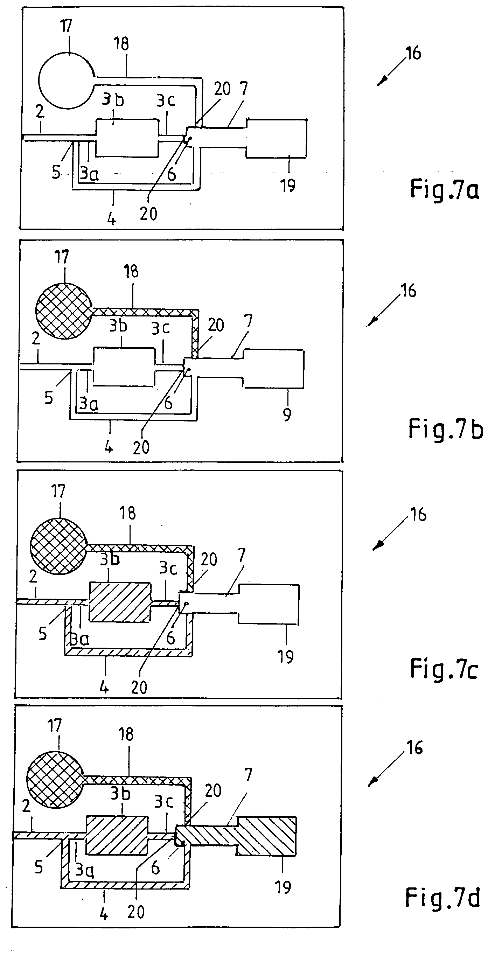

Aus dem Dokument US 6 090 251 A, Fig. 7 bis 9 ist ein mikrofluidisches Netzwerk bekannt, das so befüllt werden kann, das Kanäle des Netzwerkes frei von Luftblasen befüllt sind. Offenbart ist in den Fig. 7 bis 9 eine Anzahl von parallelen ersten Kanälen, die in einen zweiten Kanal münden. Am Ende der ersten Kanäle sind Anhaltemittel vorgesehen, die verhindern, dass eine erste Flüssigkeit, mit der die ersten Kanäle befüllt werden, in den zweiten Kanal eintritt. Diese Anhaltemittel halten aber nur einen Flüssigkeitsstrom an. Luft kann dagegen durch die Anhaltemittel aus den ersten Kanälen in den zweiten Kanal übergehen und von dort aus aus dem mikrofluidischen Netzwerk entweichen. Eine zweite Flüssigkeit, mit der anschließend der zweite Kanal befüllt wird, kann diesen befüllen, ohne dass zwischen der ersten Flüssigkeit in den ersten Kanälen und der zweiten Flüssigkeit in dem zweiten Kanal Luftblasen eingeschlossen werden. In dem Dokument heißt es, dass die zweite Flüssigkeit die Anhaltemittel passiert, wobei sich an den Anhaltemitteln eine Grenzschicht zwischen den Flüssigkeiten bildet. Das bedeutet, dass die Anhaltewirkung des Anhaltemittels durch die zweite Flüssigkeit nicht aufgehoben wird. Dass die Anhaltewirkung der Anhaltemittel überhaupt aufgehoben wird, um einen Transport der ersten Flüssigkeit über die Anhaltemittel hinaus zu ermöglichen, ist in dem Dokument US 6 090 251 A nicht beschrieben. Das Dokument US 6 090 251 A offenbart daher keinen mikrofluidischen Schalter.

Der Erfindung liegt die Aufgabe zugrunde, eine Verwendung eines mikrofluidischen Schalters vorzuschlagen, welcher es erlaubt, den Flüssigkeitsstrom am Ende eines ersten Kanals für ein vorbestimmtes Zeitintervall anzuhalten, ohne dass dazu elektrisch ansteuerbare Mikroventile notwendig sind, um den Flüssigkeitsstrom wieder in Gang zu setzen. Außerdem soll der Schalter geschlossen werden können, um den Flüssigkeitsstrom wieder in Gang zu setzen, ohne dass dazu besondere Kräfte notwendig sind.

Diese Aufgabe wird erfindungsgemäß mit derVerwendung eines mikrofluidischen Schalters mit den Merkmalen des Anspruchs 1 gelöst. Weiterentwicklungen dieser erfindungsgemäßen Verwendung werden in den Unteransprüche definiert. Ein mikrofluidischer Schalter der erfindungsgemäß verwendet wird, weist zum Anhalten eines Flüssigkeitsstroms während eines Zeitintervalls neben dem zumindest einen ersten Kanal auch zumindest einen zweiten Kanal auf. Der erste Kanal und der zweite Kanal haben dabei einen gemeinsamen Endbereich und der erste Kanal weist im Endbereich das Mittel zum Anhalten (Anhaltemittel) eines in dem ersten Kanal fließenden Flüssigkeitsstrom auf. Dieses Anhaltemittel ist dabei mittels eines in dem zweiten Kanal fließenden Flüssigkeitsstromes zum Fortsetzen des Flüssigkeitsstroms in dem ersten Kanal steuerbar. Der in dem zweiten Kanal fließende Flüssigkeitsstrom veranlasst also das Anhaltemittel dazu, die Blockade des in dem ersten Kanal fließenden Flüssigkeitsstroms zu überwinden. Der mikrofluidische Schalter wird somit - in Analogie zu einem elektrischen Schalter - geschlossen und leitend.

Die Anhaltemittel bei einer mikrofluidischen Anordnung sind vorteilhaft Kapillarstopps, wie sie beispielsweise aus der Druckschrift von Hosokawa et. al. "Hydrophobic Microcapillary vent for pneumatic manipulation of liquid in $\mu$TAS" Proc. "Micro Total Analysis Systems '98", pp. 307 - 310, Banff, Canada bekannt sind. Kapillarstopps können zum Beispiel durch sich sprunghaft ändernde geometrische Eigenschaften oder Eigenschaften der Oberflächen der Wandungen des ersten Kanals zum Endbereich erzeugt werden.

Ein mikrofluidischer Schalter, der erfindungsgemäß verwendet wird, weist einen gemeinsamen Anfangsbereich für den ersten Kanal und den zweiten Kanal auf. Dieser gemeinsame Anfangsbereich kann in der Transportrichtung der ersten Flüssigkeit vor oder hinter einer Kammer oder einem Hohlraum angeordnet sein. Dem gemeinsamen Anfangsbereich kann dann ein Einlasskanal vorgeschaltet sein. Es ist somit möglich, den ersten Kanal und den zweiten Kanal mit der gleichen über den Einlasskanal eingebrachten Flüssigkeit zu speisen.

Gemäß der Erfindung kann der erste Kanal kürzer als der zweite Kanal sein. Ebenso ist es möglich, dass der erste Kanal eine größere Kapillarkraft aufweist als der zweite Kanal. Als Maß für die Kapillarkraft kann die sich auf folgende Weise berechnete Druckdifferenz genommen werden:

$$\Delta P = -2\gamma \cos \theta \ (1/w + 1/h - 1/W - 1/H),$$

wobei $\gamma$ und $\theta$ die Oberflächenspannung der Flüssigkeit beziehungsweise den Randwinkel zwischen der Flüssigkeit und der Kanalwandung und W und H geometrische Größen des Kanals vor und w und h geometrische Größen des Kanal hinter der Stelle des Kanals bezeichnen.

Der erste Kanal kann ein kleineres Volumen aufweisen als der zweite Kanal. Außerdem kann der zweite Kanal Mittel zur Verzögerung (Verzögerungsmittel) eines Flüssigkeitsstroms aufweisen. Die vorgenannten Maßnahmen können dazu dienen, den Flüssigkeitsstrom in dem zweiten Kanal so zu verzögern, dass die in dem zweiten Kanal fließende Flüssigkeit erst zu einem späteren Zeitpunkt den gemeinsamen Endbereich erreicht als die in dem ersten Kanal fließende Flüssigkeit. Darüber kann das Zeitintervall eingestellt werden, für welches die in dem ersten Kanal fließende Flüssigkeit von dem Anhaltemittel aufgehalten wird.

Bei den in dem zweiten Kanal eingebrachten Verzögerungsmitteln kann es sich um Drosseln handeln.

Dem gemeinsamen Endbereich des ersten und des zweiten Kanal kann ein Auslasskanal nachgeschaltet sein. Dieser Auslasskanal kann sich dabei in zumindest zwei Zweige aufteilen. Über diese beiden Zweige ist es dann möglich, die in dem zweiten Kanal fließende Flüssigkeit hinter dem gemeinsamen Endbereich im Wesentlichen wieder von der aus dem ersten Kanal in den gemeinsamen Endbereich einfließenden Flüssigkeit zu trennen. Vorzugsweise ist dann der gemeinsame Endbereich so ausgestaltet, dass sich die Flüssigkeiten des ersten Kanal und des zweiten Kanal bei einem leitenden Schalter laminar aneinanderlegen.

Gemäß der Erfindung können der erste Kanal, der zweite Kanal, der Einlasskanal und/oder der Auslasskanal Abschnitte mit einer oder mehreren Kammern und/oder Hohlräumen aufweisen und so als Kanalsystem ausgebildet sein. Bei diesen Hohlräumen beziehungsweise Kammern kann es sich beispielsweise um Reaktionskammern handeln, wozu dann in den Hohlräumen beziehungsweise Kammern vorteilhaft Reagenzien angeordnet sind.

Gemäß der Erfindung können der erste und/oder zweite Kanal und/oder Einlass- und/oder Auslasskanal mäanderförmige Abschnitte aufweisen.

Neben dem Transport der Flüssigkeiten in den Kanälen durch Kapillarkräfte können die Flüssigkeiten auch durch Druckunterschiede (Überdruck oder Unterdruck am jeweiligen Kanalende) an dem Anfang und Ende eines Kanals transportiert werden, die durch Druckerzeugungsmittel hervorgerufen werden. Damit die Funktion der Anhaltemittel erhalten bleibt, müssen die Druckerzeugungsmittel so ausgelegt oder zumindest eingestellt sein, dass der von den Druckerzeugungsmitteln erzeugte Druck allein nicht ausreicht, um die Flüssigkeit aus dem ersten Kanal über die Anhaltemittel zu transportieren. Außerdem kommen als Kräfte, welche den Transport der Flüssigkeiten in den Kanälen des Schalter ermöglichen, elektroosmotische, elektrophoretische oder elektrostatische Kräfte in Frage.

Ein Schalter, der erfindungsgemäß verwendet wird, kann Teil eines Trägers, insbesondere eines Probenträgers sein.

Mikrofluidische Anordnungen sind anhand der Zeichnung näher erläutert. Darin zeigt

Fig. 1a bis 8d      ein erstes bis siebtes Ausführungsbeispiel für einen mikrofluidischen Schalter,

Fig. 9a bis 9c      eine Einzelheit eines Schalters,

Fig. 10a bis 10d      eine Einzelheit eines alternativen Schalters und

Fig. 11      eine Einzelheit eines weiteren alternativen Schalters.

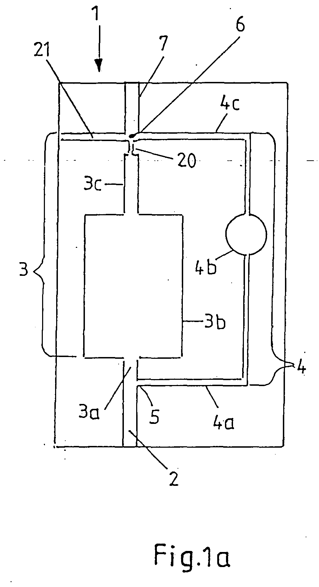

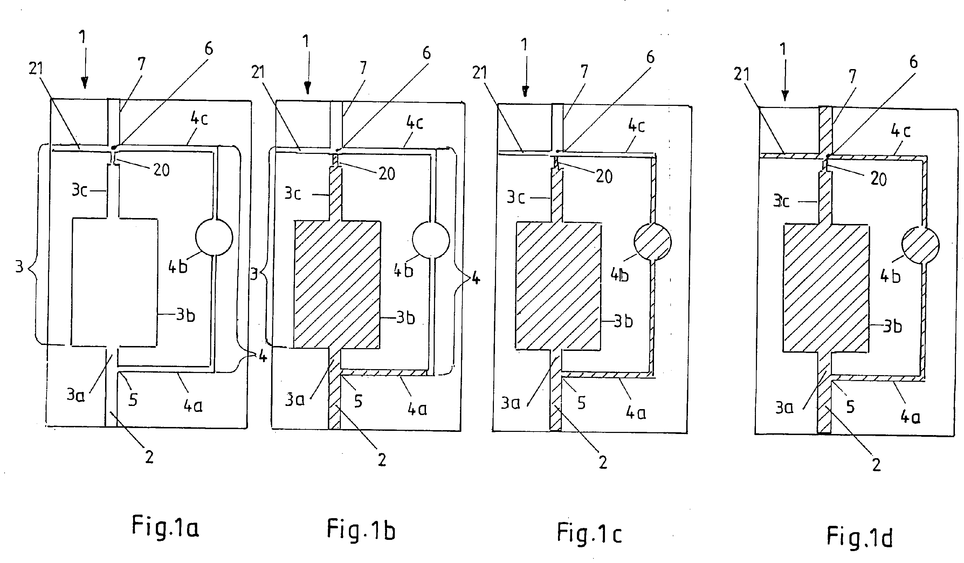

Die in den Fig. 1a bis 8d dargestellten Ausführungsbeispiele von mikrofluidischen Schaltern weisen alle zumindest einen ersten Kanal 3 und zumindest einen zweiten Kanal 4 auf, welche einen gemeinsamen Endbereich 6 haben. An diesen gemeinsamen Endbereich 6 schließt sich ein Auslasskanal 7 an.

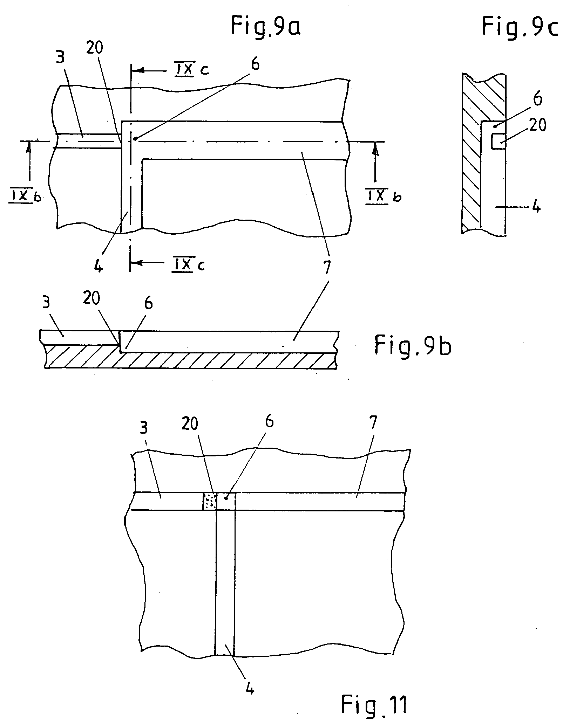

Ein gemeinsamer Endbereich 6 und die sich daran anschließenden Kanäle 3, 4, 7 und ist in den Fig. 9a bis 9c beispielhaft vergrößert und ausschnittsweise dargestellt. Anhand dieser Figuren soll zunächst ein der Erfindung zugrundeliegende Prinzip erläutert werden.

Wie bereits ausgeführt münden in den Endbereich 6 sowohl der erste Kanal 3 und der zweite Kanal 4, während der Auslasskanal 7 in dem Endbereich 6 beginnt. In dem Endbereich 6 ist an den ersten Kanal 3 anschließend ein Kapillarstopp 20 vorgesehen. Der Kapillarstopp 20 ist dabei durch eine sprunghafte Änderung der geometrischen Eigenschaften hergestellt. Ein derartiger Kapillarstopp 20 bildet ein Hindernis für eine aus dem ersten Kanalsystem 3 einströmende Flüssigkeit. Diese tritt zwar an den Kapillarstopp 20 heran, um jedoch über den Kapillarstopp 20 in den übrigen Endbereich 6 eintreten zu können, muss die Flüssigkeit einen Druckunterschied $\Delta p$ überwinden. Dieser Druckunterschied $\Delta p$ kann über die folgende mathematische Formel beschrieben werden.

$$\Delta p = -2\gamma\cos\Theta(1/w + 1/h - 1/W - 1/H),$$

wobei

w      die Breite des den Kapillarstopp 20 bildenden Kanals,
h      die Höhe des den Kapillarstopp 20 bildenden Kanals,
W      die Breite des übrigen Endbereichs 6 im Anschluss an den Kapillarstopp 20 und
H      die Höhe des übrigen Endbereichs 6 im Anschluss an den Kapillarstopp 20 ist.

Über $\Theta$ und $\gamma$ gehen Materialfaktoren, nämlich der Randwinkel und die Oberflächenspannung, in die Berechnung ein. (siehe auch Hoskoma et. al. aaO). In Abhängigkeit von dem Benetzungsverhalten der Flüssigkeit können dabei die sich sprunghaft ändernden geometrischen Eigenschaften durch eine Änderung von einem großen auf einen kleinen Querschnitt erfolgen oder umgekehrt.

Der an dem Kapillarstopp 20 zu überwindende Druckunterschied $\Delta p$ kann aufgrund der Transportkräfte, welche die Strömung der Flüssigkeit in dem ersten Kanal 3 bewirken, nicht zur Verfügung gestellt werden. Der Kapillarstopp 20 stellt daher aufgrund des Druckunterschieds $\Delta p$, welchen es zu überwinden gilt, ein Hindernis für eine in dem ersten Kanal 3 einströmende Flüssigkeit dar. Der Kapillarstopp 20 kann dadurch überwunden werden, dass der Kapillarstopp 20 von dem übrigen gemeinsamen Endbereich 6 aus mit einer Flüssigkeit benetzt wird. Durch diese Flüssigkeit wird die Oberflächenspannung der an dem Kapillarstopp anstehenden Flüssigkeit herabgesetzt und die in dem Kapillarstopp 20 aufgestaute Flüssigkeit kann austreten. Bei der vorliegenden Erfindung wird eine zweite Flüssigkeit gewählt, welche von außen an den Kapillarstopp 20 in den übrigen gemeinsamen Endbereich herangeführt wird. Diese Flüssigkeit tritt in Kontakt mit der in dem Kapillarstopp aufgestauten Flüssigkeit, wodurch die Strömung der ersten Flüssigkeit wieder einsetzt. Bei den in den Figuren 1a bis 8d dargestellten Ausführungsbeispielen wird also die Wirkung des Kapillarstopps 20 mittels einer über den zweiten Kanal 4 herangeführte Flüssigkeit aufgehoben.

Der zweite Kanal 4 hat, wie in Fig. 9c dargestellt, eine gleiche Tiefe wie der gemeinsame Endbereich 6 und der sich daran anschließende Auslasskanal 7. Dadurch wird eine Unterbrechung des Flüssigkeitstransports aus dem zweiten Kanal 4 in den gemeinsamen Endbereich 6 verhindert. Hat der zweite Kanal 4 vor seinem Ende eine Höhe, die kleiner ist als die Höhe des gemeinsamen Endbereichs 6, kann die Höhe des Endbereichs 6 am Ende des zweiten Kanals 4 durch konstruktive Maßnahmen erreicht werden. Dazu gehören zum Beispiel Rampen, Treppen oder Kerben, welche den Boden des zweiten Kanals 4 auf das Niveau des Bodens des Endbereichs 6 bringen. Derartige Kerben sind zum Beispiel in der Patentschrift US 6,296,126 B1 beschrieben. Dadurch kann die Unterbrechung der Strömung im zweiten Kanal 4 beim Übergang in den gemeinsamen Endbereich 6 verhindert werden.

Der gemeinsame Endbereich 6 weist dagegen zu dem ersten Kanal hin einen Absatz auf (Fig. 9b, 9c). Der gemeinsame Endbereich hat dadurch eine größere Tiefe als der erste Kanal 3. Durch diese sprunghafte Änderung der Geometrie wird der Kapillarstopp gebildet.

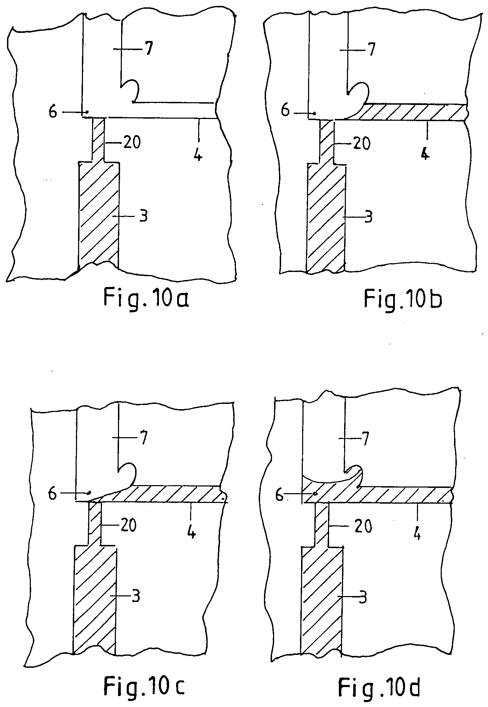

Die in den Fig. 10a bis 10d dargestellte Einzelheit eines alternativen Schalters weist im Unterschied zu dem in Fig. 9a bis 9c dargestellten Schalters einen Kapillarstopp 20 auf, welcher sich als gegenüber ersten Kanal 3 verjüngter Kanal an den ersten Kanal 3 anschließt. Das Ende des verjüngten Kanals am Übergang zum gemeinsamen Endbereich 6 ist ein Kapillarstopp. Ein weiterer Unterschied besteht in einer sackartigen Einkerbung im Übergangsbereich zwischen dem zweiten Kanal 4 und dem Endbereich 6. Im übrigen entspricht der Schalter dem in den Fig. 9a bis 9c dargestellten Schalter.

In Fig. 10a ist dargestellt wie ein Flüssigkeitsstrom über den ersten Kanal 3 in den Kapillarstopp 20 eingedrungen ist und dort an der Grenze des Kapillarstopps 20 zu dem übrigen Endbereich 6 aufgrund der Oberflächenspannung, wie bereits beschrieben, zum Stehen kommt. Über den in den Endbereich 6 beispielsweise rechtwinklig oder geneigt zum ersten Kanal 3 einmündende zweite Kanal 4 wird ein Flüssigkeitsstrom aufgrund von Transportkräften zum Beispiel Kapillarkräften zu dem Endbereich 6 transportiert. Sobald diese in dem zweiten Kanal 4 transportierte Flüssigkeit den aufgeweiteten Bereich des Endbereichs 6 erreicht hat, fließt die Flüssigkeit aufgrund der Kapillarkräfte in den Endbereich 6, in welchen der Kapillarstopp 20 einmündet (Fig. 10b). Sobald die Flüssigkeit die Austrittsöffnung des Kapillarstopps 20 erreicht hat (Fig. 10c), wird die Austrittsöffnung von außen benetzt und die Wirkung des Kapillarstopps 20 wird aufgehoben. Die Flüssigkeitsfront der aus dem zweiten Kanal 4 austretenden Flüssigkeit berührt dabei den Flüssigkeitsmeniskus im Mündungsbereich des Kapillarstopps 20. Die Flüssigkeit aus dem zweiten Kanal 4 und dem Kapillarstopp 20 treten in Kontakt und die Oberflächenspannung, welche am Ausgang des Kapillarstopps 20 hätte überwunden werden müssen, ist dadurch herabgesetzt. Daher kann dann die über den ersten Kanal 3 herangeführte Flüssigkeit, wie auch die über den zweiten Kanal 4 herangeführte Flüssigkeit, den Endbereich 6 vollständig befüllen und von dort aus über den Auslasskanal 7 weitergeführt werden.

Das durch den Kapillarstopp 20 gebildete Anhaltemittel ist also über den in dem zweiten Kanal 4 herangeführten Flüssigkeitsstrom derart steuerbar, dass der durch das Anhaltemittel (Kapillarstopp 20) unterbrochene Flüssigkeitsstrom im ersten Kanal 3 fortgesetzt werden kann. Durch konstruktive Maßnahmen kann bei einem mikrofluidischen Schalter erreicht werden, dass zunächst der Flüssigkeitsstrom den ersten Kanal 3 vollständig befüllt hat, bevor der Flüssigkeitsstrom in dem zweiten Kanal 4 zeitverzögert die Unterbrechung des Flüssigkeitsstroms im ersten Kanal 3 aufhebt.

Die in der Fig. 11 dargestellte Einzelheit eines weiteren alternativen Schalters weist im Unterschied zu den in den Fig. 9a bis 9c beziehungsweise in den Fig. 10a bis 10d dargestellten Schaltern einen Kapillarstopp 20 auf, welcher durch einen Wechsel der Oberflächeneigenschaften der Wandungen im Bereich des gemeinsamen Endbereichs 6 gegenüber dem angrenzenden ersten Kanal 3 ausgebildet ist. Während die Oberfläche der Wandung des ersten Kanals 3 hydrophile Eigenschaften hat, ist die Oberfläche der Wandung im gemeinsamen Endbereich mit hydrophoben Eigenschaften ausgestattet. Durch den sprunghaften Wechsel der Oberflächeneigenschaften beim Übergang von dem ersten Kanal 3 zum gemeinsamen Endbereich 6 wird der Kapillarstopp 20 ausgebildet, an welchem eine über den ersten Kanal 3 herangeführte Flüssigkeitsfront anhält, da die Transportkräfte nicht ausreichen, um den Kapillarstopp 20 zu überwinden. Das so durch den Kapillarstopp 20 gebildete Unterbrechungsmittel kann dann auf die bekannte Art und Weise über eine in dem zweiten Kanal 4 herangeführte Flüssigkeit so angesteuert werden, dass der Flüssigkeitstransport der Flüssigkeit im ersten Kanal 3 fortgesetzt wird.

Anhand der nun folgenden Darstellung werden die verschiedenen mikrofluidischen Schalter näher beschrieben, wobei auf die Unterschiede zwischen den verschiedenen Ausführungsformen näher eingegangen wird. Die einzelnen Kanäle 2, 3, 4, 7 der Schalter weisen überwiegend Hohlräume auf und sind so als Kanalsysteme ausgebildet und im Folgenden auch als solche bezeichnet.

Im Weiteren wird auf die Fig. 1a bis 1b Bezug genommen. Das in den Fig. 1a bis 1b dargestellte erste Ausführungsbeispiel 1 weist ein Einlasskanalsystem 2 auf. Dieses Einlasskanalsystem 2 mündet in einen Anfangsbereich 5, in welchem das ersten Kanalsystem 3 und das zweite Kanalsystem 4 beginnen. Das erste Kanalsystem 3 weist im Anschluss an den Anfangsbereich 5 einen ersten Abschnitt 3a in Form eines Kanals auf. An diesen ersten Abschnitt 3a schließt sich ein zweiter Abschnitt 3b an. Dieser zweite Abschnitt 3b ist als Hohlraum ausgeführt und wobei in diesen Hohlraum Chemikalien zum Beispiel Reagenzien eingebracht sein können. Der zweite Abschnitt 3b kann somit eine Reaktionskammer in der mikrofluidischen Anordnung gemäß dem ersten Ausführungsbeispiel 1 bilden. Der zweite Abschnitt 3b des ersten Ausführungsbeispiels 1 ist über einen dritten Abschnitt 3c, der ebenfalls wie der erste Abschnitt als Kanal ausgebildet ist, mit dem Endbereich 6 und dort insbesondere mit dem Kapillarstopp 20 verbunden.

Im Anschluss an den Anfangsbereich 5 weist das zweite Kanalsystem 4 einen ersten Abschnitt 4a auf, der als Kanal ausgebildet ist. An diesen ersten Abschnitt schließt sich ein zweiter Abschnitt 4b an, welcher als Hohlraum ausgebildet ist und an welchen sich dann ein dritter Abschnitt 4c anschließt, welcher in den Endbereich 6 mündet.

Anhand der Fig. 1b bis 1d ist das Funktionieren des Schalters gemäß dem ersten Ausführungsbeispiel 1 dargestellt. Der mikrofluidische Schalter wird dabei über das Einlasskanalsystem 2 befüllt. Die in das Einlasskanalsystem 2 eintretende Flüssigkeit wird dazu aufgrund der Kapillarkräfte in dem Einlasskanalsystem 2 zum Anfangsbereich 5 transportiert. Von dort aus teilt sich der Flüssigkeitsstrom, wobei sich das Kanalsystem 3 schneller mit Flüssigkeit befüllt als das Kanalsystem 4. Es befüllt sich im ersten Kanalsystem 3 mit einem Teil der Flüssigkeit nacheinander der erste Abschnitt 3a, der als Reaktionskammer ausgebildete zweite Abschnitt 3b und der dritte Abschnitt 3c. Von dem dritten Abschnitt 3c des ersten Kanalsystems 3 aus wird dann auch der Kapillarstopp 20 befüllt, bis der Flüssigkeitsmeniskus am Ende des Kapillarstopps 20 zum Stehen kommt.

Der andere Teil der Flüssigkeit wird in das zweite Kanalsystem 4 transportiert (Fig. 1b, Fig. 1c). Zunächst wird dabei der erste Abschnitt 4a und dann der den zweiten Abschnitt 4b bildende Hohlraum befüllt. Anschließend tritt die Flüssigkeit aufgrund der wirkenden Kapillarkräfte in den dritten Abschnitt 4c des zweiten Kanalsystems 4 ein und gelangt zeitlich verzögert in den Endbereich 6. In diesem Endbereich 6 wird dann auf die beschriebene Art und Weise der Kapillarstopp 20 aufgehoben. Während der bis zum Aufheben des Kapillarstopps 20 durch die aus dem zweiten Kanalsystem 4 austretenden Flüssigkeit vergangenen Zeit haben die in der Reaktionskammer des zweiten Abschnitts 3b des ersten Kanalsystems eingebrachten Reagenzien mit der in diesen zweiten Abschnitt 3b eingeströmten Flüssigkeit reagiert. Durch das Aufheben des Kapillarstopps 20 kann nun die Flüssigkeit aufgrund der wirkenden Kapillarkräfte aus der Reaktionskammer heraustransportiert werden und über den Auslasskanal 7 aus der mirkrofluidischen Anordnung entnommen werden.

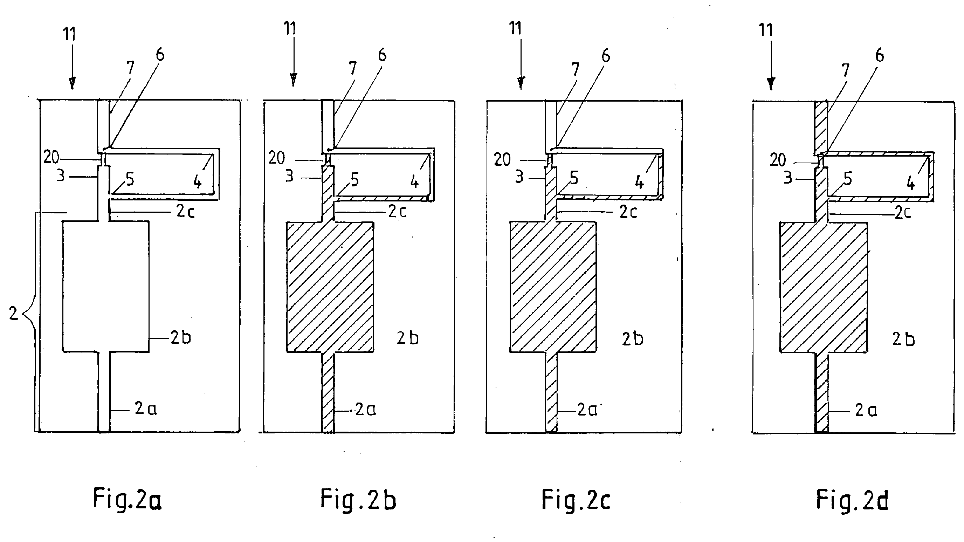

Nachfolgend wird weiter auf die Fig. 2a bis 2d Bezug genommen anhand derer das zweite Ausführungsbeispiel 11 erläutert wird. Wie das erste Ausführungsbeispiel 1 weist auch das zweite Ausführungsbeispiel 11 ein Einlasskanalsystem 2 auf. Das Einlasskanalsystem 2 besteht dabei aus einem ersten Abschnitt 2a, welcher als Kanal ausgeführt ist. An diesen ersten Abschnitt 2a schließt sich ein zweiter Abschnitt 2b an. Dieser zweite Abschnitt 2b wird durch einen Hohlraum gebildet. Über einen dritten Abschnitt 2c des Einlasskanalsystems ist der zweite Abschnitt 2b mit einem Anfangsbereich 5 verbunden, in dem das erste Kanalsystem 3 und das zweite Kanalsystem 4 beginnen. Sowohl das erste Kanalsystem 3 als auch das zweite Kanalsystem 4 werden bei dem zweiten Ausführungsbeispiel 11 durch einfache Kanäle gebildet. Durch entsprechende Ausgestaltung der Kanäle des ersten Kanalsystems 3 und des zweiten Kanalsystems 4 wird erreicht, dass ein Flüssigkeitstransport in dem ersten Kanalsystem 3 wesentlich schneller erfolgt als in dem zweiten Kanalsystem 4. Die beiden Kanalsysteme 3, 4 münden in einem gemeinsamen Endbereich, wobei sich die in den beiden Kanalsystemen 3, 4 transportierten Flüssigkeiten ersten hinter dem in dem Endbereich 6 angeordneten Kapillarstopp 20 vereinigen können.

Das zweite Ausführungsbeispiel 11 eines mikrofluidischen Schalters wird über den ersten Abschnitt 2a des Einlasskanalsystems befüllt. Die eintretende Flüssigkeit wird aufgrund der wirkenden Kapillarkräfte in den zweiten Abschnitt 2b des Einlasskanalsystems befördert. Die Flüssigkeit wird über den dritten Abschnitt 2c des Einlasskanalsystems 2 zum gemeinsamen Anfangspunkt 5 des ersten Kanalsystems 3 und des zweiten Kanalsystems 4 transportiert. Ein erster Teil der Flüssigkeit wird von dem Anfangspunkt 5 in das erste Kanalsystem 3 transportiert und dringt von dort aus aufgrund der wirkenden Kapillarkräfte in den Kapillarstopp 20 ein. Am Ende des Kapillarstopps 20 zum übrigen Endpunkt 6 hin bleibt die Flüssigkeit stehen. Ein zweiter Teil der Flüssigkeit der am Anfangspunkt 5 angelangten Flüssigkeit wird durch den Kanal des zweiten Kanalsystems 4 zum Endbereich 6 transportiert (Fig. 2b, 2c). Sobald die in dem zweiten Kanalsystem 4 transportierte Flüssigkeit den Endbereich 6 erreicht hat, wird der Kapillarstopp 20 auf die beschriebene Art und Weise aufgehoben. Die Flüssigkeit kann dann über das erste Kanalsystem 3, das zweite Kanalsystem 4 und das Auslasskanalsystem 7 abgeführt werden. Hierbei wird der Transport der Flüssigkeit mittels der wirkenden Kapillarkräfte erreicht.

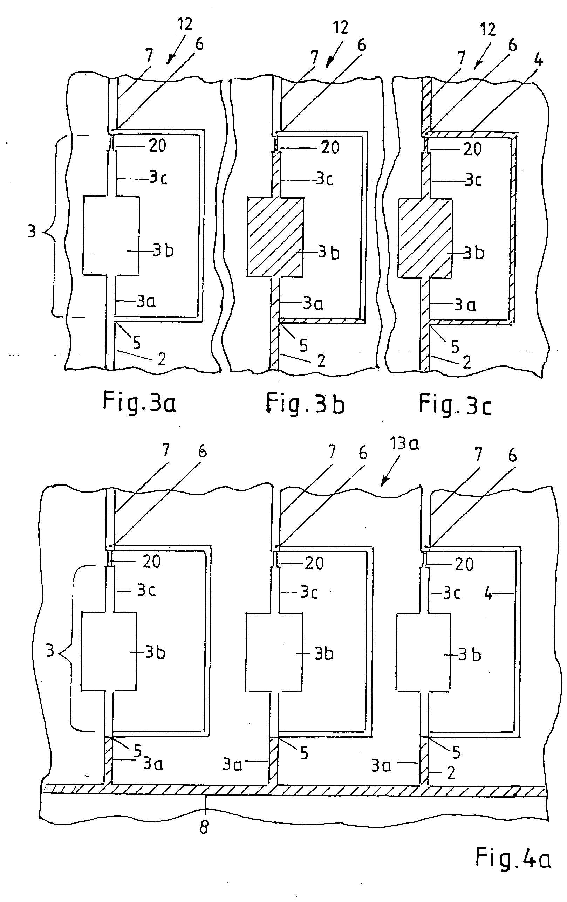

Das dritte Ausführungsbeispiel 12 eines mikrofluidischen Schalters wird nun anhand der Fig. 3a bis 3c erläutert. Das in den Fig. 3a bis 3c dargestellte dritte Ausführungsbeispiel 12 unterscheidet sich von dem in den Fig. 1a bis 1e dargestellten ersten Ausführungsbeispiel im Wesentlichen dadurch, dass das zweite Kanalsystem 4 nicht in verschiedene Abschnitte unterteilt ist. Vielmehr erstreckt sich das zweite Kanalsystem 4 als ein Kanal vom Anfangsbereich 5 zum Endbereich 6. Der Querschnitt dieses Kanals ist dabei deutlich geringer ausgeführt als der Querschnitt des ersten Kanalsystems 3 in den Abschnitten 3a und 3c. Dieses hat den Vorteil, dass das Volumen der für die Ansteuerung des Unterbrechungsmittels (Kapillarstopp 20) notwendigen in dem zweiten Kanalsystem 4 transportierten Flüssigkeit deutlich geringer ist. Die über das Einlasskanalsystem 2 einströmende Flüssigkeit wird also fast vollständig in das erste Kanalsystem 3 und somit auch in die Reaktionskammer, die durch den zweiten Abschnitt 3b gebildet wird, transportiert. Dieser in das erste Kanalsystem 3 transportierte weitaus größere Anteil der in die mikrofluidische Anordnung 12 einströmende Flüssigkeitsmenge kann somit in das Produkt umgesetzt werden ohne dass dieses Produkt anschließend im Endbereich 6 durch die über das zweite Kanalsystem 4 einströmende Flüssigkeitsmenge verdünnt wird.

Im Folgenden wird auf die Fig. 4a Bezug genommen. In dieser Figur ist eine mikrofluidische Anordnung 13a dargestellt. Die mikrofluidische Anordnung 13a entspricht einer Kombination von drei mikrofluidischen Schaltern gemäß dem dritten Ausführungsbeispiel 12, wobei die mikrofluidischen Schalter gemäß dem dritten Ausführungsbeispiel 12 parallel zueinander angeordnet sind und über einen gemeinsamen Zuleitungskanal 8 mit Flüssigkeit versorgt werden. Von diesem gemeinsamen Zuleitungskanal 8 zweigen die Einlasskanalsysteme 2 der drei parallel geschalteten mikrofluidischen Schalter gemäß dem dritten Ausführungsbeispiel 12 ab. Die gesamte mikrofluidische Anordnung 13a wird somit durch die Schalter gemäß dem dritten Ausführungsbeispiel 12 und der Zuleitungskanäle 8 gebildet. Im übrigen funktioniert jeder der Schalter des Ausführungsbeispiels 13a wie ein einzelner mikrofluidischer Schalter gemäß dem dritten Ausführungsbeispiel 12.

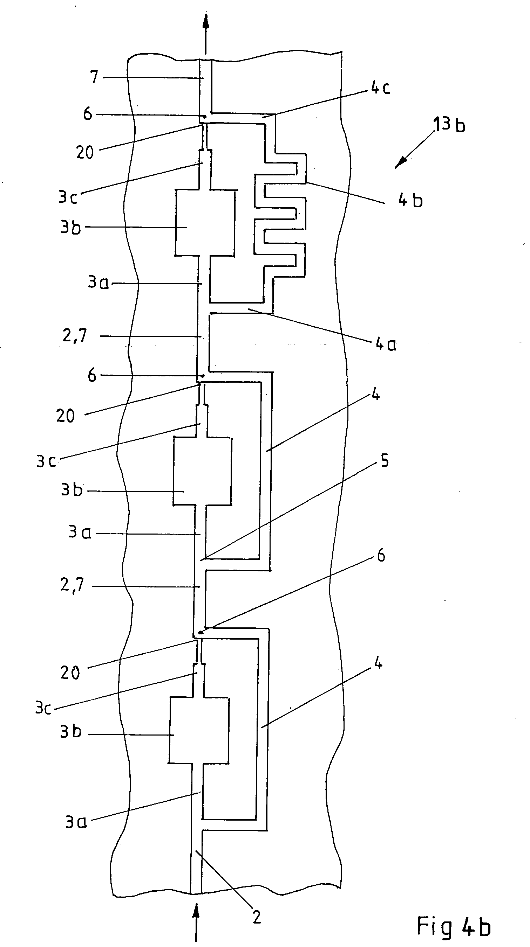

Die in der Fig. 4b dargestellte mikrofluidische Anordnung 13b weist drei mikrofluidische Schalter gemäß dem dritten Ausführungsbeispiel 12 auf. Die mikrofluidischen Schalter sind dabei seriell hintereinander geschaltet, d. h. in der Transportrichtung der Flüssigkeiten schließt sich an das Auslasskanalsystem 7 eines ersten Schalters das Einlasskanalsystem 2 eines zweiten Schalters an und an den Auslasskanal 7 des zweiten Schalters schließt sich der Einlasskanal 2 eines dritten Schalters an. Die einzelnen Schalter entsprechen dabei den Schaltern gemäß dem dritten Ausführungsbeispiel 12, wie er in den Fig. 3a bis 3c dargestellt ist. Lediglich der dritte Schalter der mikrofluidischen Anordnung gemäß Fig. 4b ist im Bereich des zweiten Kanalsystems 4 anders ausgebildet. Das zweite Kanalsystem 4 weist drei in Transportrichtung der Flüssigkeit hintereinanderliegende Abschnitte auf. Der erste Abschnitt 4a und der dritte Abschnitt 4c sind dabei als einfache Kanäle ausgebildet, während der mittlere und zweite Abschnitt 4b mäanderförmig ausgebildet ist. Durch das Mäandrieren des zweiten Abschnitts 4b wird das zweite Kanalsystem des dritten Schalters gegenüber den zweiten Kanalsystemen des ersten und zweiten Schalters verlängert. Dadurch ist das Zeitintervall, welches beim dritten Schalter vergeht, bis die Flüssigkeit aus dem zweiten Kanalsystem 4 den gemeinsamen Endbereich 6 erreicht, größer als bei dem ersten und bei dem zweiten Schalter der mikrofluidischen Anordnung 13b. Im übrigen funktionieren die einzelnen Schalter der mikrofluidischen Anordnung 13b wie die einzelnen Schalter gemäß dem dritten Ausführungsbeispiel 12.

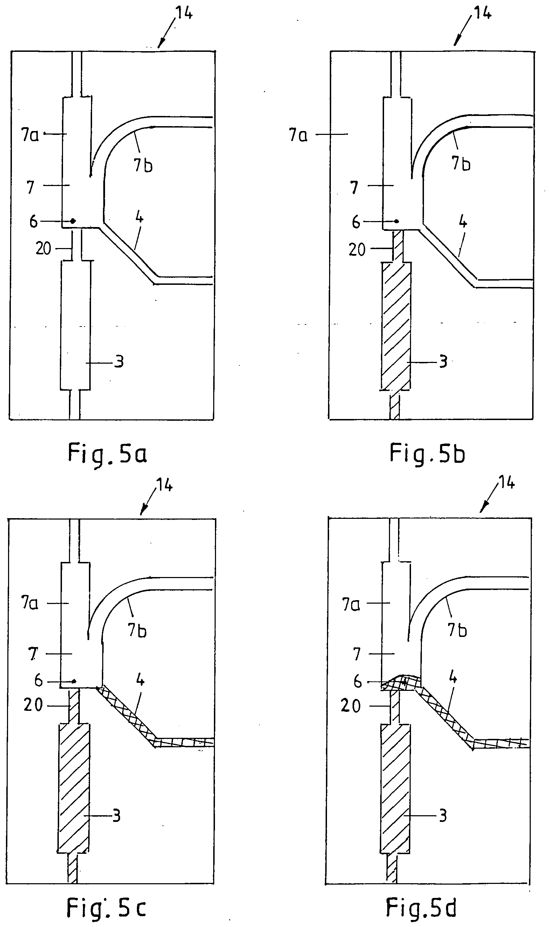

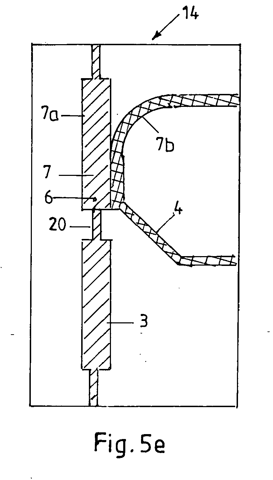

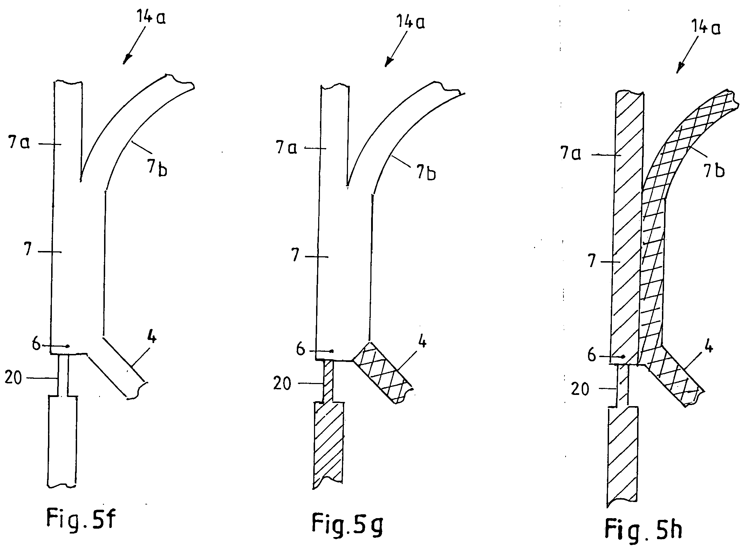

Das vierte Ausführungsbeispiel 14 eines mikrofluidischen Schalters ist anhand der Fig. 5a bis 5h dargestellt. Dabei zeigen die Fig. 5f, 5g und 5h Einzelheiten der Fig. 5a, 5c beziehungsweise 5e.

Im Unterschied zu den bisher beschriebenen Ausführungsbeispielen ist bei dem vierten Ausführungsbeispiel 14 das zweite Kanalsystem 4 in einem spitzen Winkel zu dem ersten Kanalsystem 3 auf den gemeinsamen Endbereich 6 geführt. Ein weiterer Unterschied liegt darin, dass das Auslasskanalsystem 7 sich beabstandet vom gemeinsamen Endbereich in einen ersten Zweig 7a und einen zweiten Zweig 7b aufteilt. Dabei hat der erste Zweig 7a eine Querschnittsfläche, die im Wesentlichen der Querschnittsfläche des ersten Kanalsystems 3 entspricht. Der zweite Zweig hat dagegen eine Querschnittsfläche, welche im Wesentlichen der Querschnittsfläche des zweiten Kanalsystems 4 entspricht.

Der diesem vierten Ausführungsbeispiel eine mikrofluidischen Anordnung zugrundeliegende Gedanke ist, dass die über das erste Kanalsystem 3 beziehungsweise das zweite Kanalsystem 4 herangeführten Flüssigkeiten sich unmittelbar an den gemeinsamen Endbereich 6 anschließenden Bereich des Auslasskanalsystems 7 ohne sich nennenswert zu vermischen "aneinanderlegen" und dann laminar zu dem Verzweigungspunkt des ersten Zweigs 7a und des zweiten Zweigs 7b strömen, wo dann die über das erste Kanalsystem 3 herangeführte Flüssigkeit in den ersten Zweig 7a und die über das zweite Kanalsystem 4 hereinströmende Flüssigkeit über den zweiten Zweig 7b abgeführt wird. Die Eigenschaft laminarer Strömungen von verschiedenen Flüssigkeiten ist beispielsweise bereits in der Druckschrift DE 195 36 858 C2 beschrieben.

Strömt nun ein Produkt aus einer Reaktionskammer in das erste Kanalsystem 3 und von dort aus in den Kapillarstopp 20 ein, bleibt dieses Produkt aufgrund des Kapillarstopps 20 im gemeinsamen Endbereich 6 stehen. Zeitverzögert zu dem Einströmen des Produktes in das erste Kapillarsystem 3 beziehungsweise dem Kapillarstopp 20 fließt dann (Fig. 5c) eine zweite Flüssigkeit über das zweite Kanalsystem 4 heran, um dann in den gemeinsamen Endbereich 6 einzutreten (Fig. 5d). Dabei benetzt die aus dem zweiten Kanalsystem 4 einströmende Flüssigkeit die Austrittsöffnung des Kapillarstopps 20 und hebt die Funktion des Kapillarstopps 20 auf. Das Produkt, welches in dem Kapillarstopp 20 und dem ersten Kanalsystems 3 aufgestaut ist, wird nun aufgrund der wirkenden Kapillarkräfte in den Endbereich beziehungsweise in das Auslasskanalsystem 7 transportiert. Gleichzeitig erfolgt auch ein weiterer Transport der Flüssigkeit aus dem zweiten Kanalsystem 4. Die beiden Flüssigkeiten, welche annähernd parallel in den gemeinsamen Endbereich einströmen legen sich aufgrund fehlender Turbulenzen laminar aneinander und werden über das Auslasskanalsystem 7 nebeneinanderliegend transportiert, bis an dem Verzweigungspunkt das Produkt im Wesentlichen über den ersten Zweig 7a und die aus dem zweiten Kanalsystem 4 eingeströmte Flüssigkeit im Wesentlichen in dem zweiten Zweig 7b abgeführt wird.

Bei dem vierten Ausführungsbeispiel 14 ist eine bevorzugte Ausführung, wenn das Volumen des zweiten Kanalsystems 4 dem Volumen des Kanals 7b angeglichen ist, um so die Flüssigkeit, welche über das zweite Kanalsystem 4 einströmt im Auslasskanalsystem 7 vollständig von dem Produkt zu entfernen.

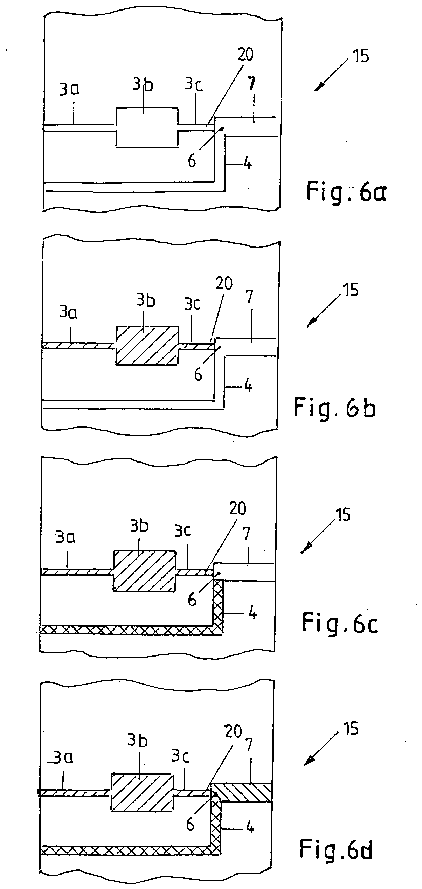

Im Folgenden wird auf Fig. 6a bis 6d Bezug genommen. In dem in der Fig. 6a bis 6d dargestellten fünften Ausführungsbeispiel 15 wird die Flüssigkeit, welche über das zweite Kanalsystem 4 einströmt nicht zuvor von der Ausgangsflüssigkeit des Produkts abgezweigt, wie dies in dem ersten, dem zweiten und dem dritten Ausführungsbeispiel der Fall ist. Vielmehr ist beim sechsten Ausführungsbeispiel 15 das zweite Kanalsystem 4 ein separates Kanalsystem, welches unmittelbar im gemeinsamen Endbereich 6 hinter dem Kapillarstopp 20 mündet. Eine derartige mikrofluidische Anordnung ist beispielsweise dazu geeignet, über das zweite Kanalsystem 4 einen Stoff für eine weitere biochemische Reaktion heranzuführen (Reagenzlösung), die nach dem Aufheben des Kapillarstopps 20 zusammen mit dem Produkt, welches über das erste Kanalsystem 3 und dem Kapillarstopp 20 einströmt, zu weiteren Reaktions-, Analysekammern oder ähnlichem geführt werden kann. Ebenso kann aber auch eine das Produkt nicht beeinflussende inerte Flüssigkeit in dem zweiten Kanalsystem 4 zum Steuern des Kapillarstopps 20 transportiert werden.

Im Folgenden wird auf die Fig. 7a bis 7d Bezug genommen. Für eine große Zahl an chemischen und biochemischen Analysen ist es erforderlich, dass das Produkt mit einer weiteren Flüssigkeit versetzt wird, um weitere Reaktionen zur Erzeugung eines neuen Produkts hervorzurufen. Ebenso ist es möglich, dass das Produkt für eine weitere Analyse verdünnt werden muss. Für solche Vorgehensweisen ist eine mikrofluidische Anordnung gemäß dem sechsten Ausführungsbeispiel 16 geeignet. Bei diesem Ausführungsbeispiel 16 wird nämlich die über das zweite Kanalsystem 4 einströmende Flüssigkeit zum Schalten zweier weiterer Kanalsysteme genutzt. In den gemeinsamen Endbereich 6 mündet nämlich neben dem ersten Kanalsystem 3 und dem zweiten Kanalsystem 4 ein drittes Kanalsystem 17, 18. Dieses Kanalsystem weist einen Hohlraum 17 und einen von dem Hohlraum 17 zu dem gemeinsamen Endbereich 6 führenden Kanal 18 auf. In den Hohlräumen 17 kann von außen über eine nicht dargestellte Öffnung eine zweite Flüssigkeit eingefüllt werden. Diese Flüssigkeit wird aufgrund der wirkenden Kapillarkräfte über den Kanal 18 zum gemeinsamen Endbereich 6 transportiert. Die Mündung des Kanals 18 in den gemeinsamen Endbereich ist dabei, wie auch die Mündung des ersten Kanalsystems 3 in den gemeinsamen Endbereich 6 als Kapillarstopp 20 ausgeführt.

Wird nun zeitverzögert zu dem Flüssigkeitstransport in dem ersten Kanalsystem 3 und dem dritten Kanalsystem 17, 18 über das zweite Kanalsystem 4 eine Flüssigkeit herangeführt, wird neben dem Kapillarstopp 20 am Ende des ersten Kanalsystems 3 auch der Kapillarstopp 20 am Ende dritten Kanalsystems 17, 18 von außen mit der aus dem zweiten Kanalsystem 4 einströmenden Flüssigkeit benetzt. Die beiden Kapillarstopps werden aufgehoben und in dem gemeinsamen Endbereich 6 und daran anschließend in dem Auslasskanalsystem 7 werden die verschiedenen Flüssigkeiten, über dem Auslasskanalsystem 7 in eine weitere Reaktionskammer oder in eine Analysekammer 19 übertragen. Da das zweite Kanalsystem 4 die gleiche Tiefe hat, wie der gemeinsame Endbereich 6 beziehungsweise das Auslasskanalsystem 7, kann die von dem zweiten Kanalsystem 4 einströmende Flüssigkeit ungehindert in den gemeinsamen Endbereich 6 einfließen und so die beiden Kapillarstopps 20 für das erste Kanalsystem 3 und das dritte Kanalsystem 27, 18 benetzen und die Kapillarstopps aufheben.

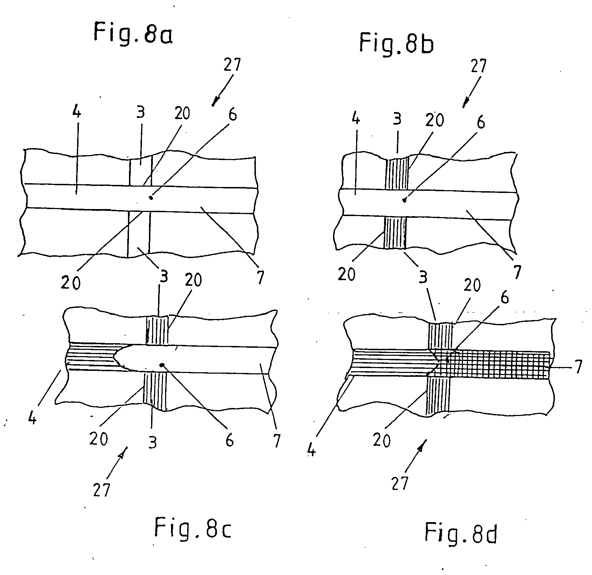

Anhand der Fig. 8a bis 8d soll nun ein siebtes Ausführungsbeispiel 27 für einen Schalter betrieben werden. Dieser Schalter weist zwei erste Kanalsysteme 3 auf, welche an einen gemeinsamen Endbereich 6 herangeführt werden. Die Mündung der ersten Kanalsysteme 3 ist dabei als Kapillarstopp 20 ausgebildet, so dass eine in den ersten Kanalsystemen 3 transportierte Flüssigkeit an den Kapillarstopps 20 anhält und nicht in den gemeinsamen Endbereich 6 eindringt.

In den gemeinsamen Endbereich mündet ferner ein zweites Kanalsystem 4. Mittels einer in dem zweiten Kanalsystem 4 transportierten Flüssigkeit, können die Kapillarstopps 20 mit einer Flüssigkeit benetzt werden, wodurch die Kapillarstopps 20 aufgehoben werden und die in den ersten Kanälen 3 herangeführte Flüssigkeiten in den gemeinsamen Endbereich 6 eindringen. Mittels eines Auslasskanalsystems 7 werden dann die sich in dem gemeinsamen Endbereich 6 befindenden Flüssigkeiten der beiden ersten Kanalsysteme und die Flüssigkeit des zweiten Kanalsystems 4 von dem gemeinsamen Endbereich wegtransportiert.

**Patentansprüche**

1.　Verwendung eines mikrofluidischen Schalters (1) zum Anhalten eines Flüssigkeitsstroms während eines Zeitintervalls wobei

- der Schalter zumindest einen ersten Kanal (3) und zumindest einen zweiten Kanal (4) aufweist;
- der erste Kanal (3) und der zweite Kanal (4) einen gemeinsamen Anfangsbereich (5) haben;
- der erste Kanal (3) und der zweite Kanal (4) einen gemeinsamen Endbereich (6) haben;
- der Schalter als einziges Anhaltemittel (20) ein Anhaltemittel zum Anhalten eines in dem ersten Kanal (3) fließenden Flüssigkeitsstroms aufweist;
- der erste Kanal (3) das Anhaltemittel (20) am Übergang zum gemeinsamen Endbereich (6) aufweist;
- das Anhaltemittel (20) mittels eines in dem zweiten Kanal (4) fließenden Flüssigkeitsstroms zum Fortsetzen des Flüssigkeitsstroms in dem ersten Kanal (3) steuerbar ist, so dass der Flüssigkeitsstrom in dem ersten Kanal (3) in den gemeinsamen Endbereich (6) übergehen kann,

**gekennzeichnet durch**

- einen Transport einer ersten Flüssigkeit in dem ersten Kanal (3) bis zum einzigen Anhaltemittel (20) des Schalters, das am Ende des ersten Kanals angeordnet ist,
- einen zeitlich verzögerten Transport einer zweiten Flüssigkeit in dem zweiten Kanal (4) zum gemeinsamen Endbereich (6) des ersten Kanals (3) und des zweiten Kanals (4),
- ein Ansteuern des Anhaltemittels (20) durch die zweite Flüssigkeit zum Weitertransport der ersten Flüssigkeit über das Anhaltemittel (20) hinaus.

2. Verwendung nach Anspruch 1, **gekennzeichnet durch**

- einen Transport der Flüssigkeit im ersten Kanal und/oder im zweiten Kanal durch Kapillarkraft.

3. Verwendung nach Anspruch 1 oder 2, **dadurch gekennzeichnet, dass** die zweite Flüssigkeit die gleiche Flüssigkeit wie die erste Flüssigkeit ist.

**Claims**

1. Use of a microfluidic switch (1) to temporarily stop a flow of liquid wherein

- the switch has at least one first channel (3) and at least one second channel (4);
- the first channel (3) and the second channel (4) have a common entry section (5);
- the first channel (3) and the second channel (4) have a common end section (6);
- the switch has means for stopping a flow of liquid flowing in the first channel (3) as a single stopping means (20);
- the first channel (3) has the stopping means (20) at the transition to the common end section (6);
- the stopping means (20) can be controlled by means of a flow of liquid flowing in the second channel (4) to continue the flow of liquid in the first channel (3), such that the flow of liquid in the first channel (3) can migrate to the common end section (6),

**characterised by**

- transportation of a first liquid in the first channel (3) to the single stopping means (20) of the switch which is arranged at the end of the first channel,
- time-delayed transportation of a second liquid in the second channel (4) to the common end section (6) of the first channel (3) and the second channel (4),
- triggering of the stopping means (20) by the second liquid for onward transportation of the first liquid beyond the stopping means (20).

2. Use according to claim 1, **characterised by**

- transportation of the liquid in the first channel and/or in the second channel by capillary force.

3. Use according to claim 1 or 2, **characterised in that** the second liquid is the same liquid as the first liquid.

**Revendications**

1. Utilisation d'un commutateur microfluidique (1) pour arrêter un flux de liquide pendant un intervalle de temps, dans laquelle

- le commutateur comporte au moins un premier canal (3) et au moins un deuxième canal (4) ;
- le premier canal (3) et le deuxième canal (4) ont une zone initiale (5) commune ;
- le premier canal (3) et le deuxième canal (4) ont une zone finale (6) commune ;
- le commutateur comporte comme seul moyen d'arrêt (20) un moyen d'arrêt destiné à arrêter un flux de liquide coulant dans le premier canal (3) ;
- le premier canal (3) comporte le moyen d'arrêt (20) au niveau de la transition avec la zone finale (6) commune ;
- le moyen d'arrêt (20) peut être commandé au moyen d'un flux de liquide coulant dans le deuxième canal (4) afin de poursuivre le flux de liquide dans le premier canal (3) de telle sorte que le flux de liquide dans le premier canal (3) peut passer dans la zone finale (6) commune ;

**caractérisée par**

- un transport d'un premier liquide dans le premier canal (3) jusqu'au seul moyen d'arrêt (20) du commutateur, lequel moyen d'arrêt est agencé au niveau de la fin du premier canal,
- un transport retardé d'un deuxième liquide dans le deuxième canal (4) jusqu'à la zone finale (6) commune du premier canal (3) et du deuxième canal (4),
- une commande du moyen d'arrêt (20) par le deuxième liquide pour poursuivre le transport du premier liquide au-delà du moyen d'arrêt (20).

2. Utilisation selon la revendication 1, **caractérisée par**

   - un transport du liquide dans le premier canal et/ou dans le deuxième canal par force capillaire.

3. Utilisation selon la revendication 1 ou 2, **caractérisée en ce que** le deuxième liquide est le même liquide que le premier liquide.

Fig.1a

Fig.1a          Fig.1b          Fig.1c          Fig.1d

EP 1 441 131 B1

Fig.2a          Fig.2b          Fig.2c          Fig.2d

EP 1 441 131 B1

Fig.3a          Fig.3b          Fig.3c

Fig.4a

Fig 4b

Fig. 5a

Fig. 5b

Fig. 5c

Fig. 5d

Fig. 5e

Fig. 5h

Fig.5g

Fig.5f

Fig. 6a

Fig. 6b

Fig. 6c

Fig. 6d

Fig.7a

Fig.7b

Fig.7c

Fig.7d

Fig.8a

Fig.8b

Fig.8c

Fig.8d

Fig.9a

Fig.9c

Fig.9b

Fig.11

Fig.10a

Fig.10b

Fig.10c

Fig.10d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9946045 A
- US 6296126 B1
- US 20020036018 A1
- US 6090251 A
- DE 19536858 C2

**In der Beschreibung aufgeführte Nicht-Patentliteratur**

- **HOSOKAWA.** Hydrophobic Microcapillary vent for pneumatic manipulation of liquid in μTAS'' Proc. *Micro Total Analysis Systems,* vol. 98, 307-310